# EUROPEAN PATENT SPECIFICATION

(11) **EP 1 290 851 B1**
(45) Date of publication and mention of the grant of the patent: **23.05.2012**
(21) Application number: 01938507.9
(22) Date of filing: 24.05.2001
(51) Int. Cl.: H04L 29/06

(54) **SYSTEM AND METHOD OF CONTROLLING APPLICATION LEVEL ACCESS OF A SUBSCRIBER TO A NETWORK**
VERFAHREN UND VORRICHTUNG ZUR STEUERUNG DES ANWENDUNGSSCHICHTZUGANGS EINES TEILNEHMERS AUF EIN NETZWERK
SYSTEME ET PROCEDE POUR CONTROLER LE NIVEAU D'ACCES D'UN ABONNE A UN RESEAU DANS UNE APPLICATION

(30) Priority: 30.05.2000 US 580425; 08.12.2000 US 731758
(43) Date of publication of application: 12.03.2003
(73) Proprietor: Nokia Corporation, 02150 Espoo (FI)
(72) Inventor: FACCIN, Stefano, Dallas, TX 75229 (US); PURNADI, Rene, Coppell, TX 75019 (US); HULKKONEN, Tony, FIN-00510 Helsinki (FI); RAJANIEMI, Jaakko, FIN-00180 Helsinki (FI); TUOHINO, Markku, FIN-02130 Espoo (FI); SIVANANDAN, Mohan, FIN-00200 Helsinki (FI)
(74) Representative: Read, Matthew Charles
(86) International application number: PCT/IB2001/001103
(87) International publication number: WO 2001/093523

(56) References cited:
- US-A- 5 944 824
- US-A- 6 064 666
- US-A- 6 067 456

## Description

The present invention relates to a system and method for controlling level or type of access of a subscriber to a network.

Access to a home network, through a visited network, has been limited to a single level of access. As a result, subscriber equipment has not been portable across multiple visited networks which are connected to a home network in view of their functionality being limited to a single level or type of access. In essence, each visited network through which a subscriber obtains access to a home network is limited to a single subscriber profile and does not provide for multiple subscriber profiles to facilitate different types of connectivity of a subscriber through a visited network to a home network.

Also seamless roaming, whether under the control of a home network or a visited network between different types of access networks, is an essential requirement in future mobile and fixed networks. While roaming between different types of access technologies, the entity providing voice over internetprotocol/internet protocol (VoIP/IP) multimedia services may remain in the same network regardless of whether the network providing the multimedia services is a home or visited network. Examples of such entities VoIP/IP multimedia networks are, e. g. Call State Control function (CSCF), Gate Keeper, SIP Server.

Different types of access networks have their own characteristics, such as quality of service (QoS) (max bandwidth, delay, etc) and there also may be differences between the set of available services. Access networks may have divergent behavior (e. g. location based services).

Another problem is that the entity where the subscriber subscription information is located in the network (e. g. User Mobility Server) (UMS) in 3GPPR00, has to know the access network type to be able to screen terminating communications to the subscriber if the currently used access network does not support that particular service or requested minimum QoS.

US 6,064,666 describes a cross service common user image database

US 5,944,824 describes a system and method for single sign-on to a plurality of network elements.

US 6,067,456 describes a system and method for relocating a user in a communications network.

### DISCLOSURE OF INVENTION

The present invention is a system and method of controlling access of a subscriber to any network. The access may be application level access. During application level registration, an application level message is sent from subscriber equipment connected to a home network or visited network which is one of a plurality of visited networks connected to the home network. The visited network may be one of a plurality of visited networks directly connected to the home network or may be one of a plurality of access networks which are connected to the home network through a visited network. The application level message includes a subscriber identity and level of access to any network which may be the home network, any one of the plurality of networks or another network to which the subscriber may be connected. The level of access may be in the form of an access mode ID comprised of a plurality of bits which uniquely identify one of a plurality of choices of level of access to another network which are available to any network to which the subscriber may connect subscriber equipment.

The networks directly connected to the home network in accordance with the invention are diverse in nature and without limitation may be a public cellular visited network such as a general packet radio system (GPRS), a wireline internet service provider (ISP), or a wireless local area network (LAN) such as, but without limitation, a local area network within a corporation. Regardless of the type of visited network directly connected to the home network, the application level registration message is sent from an entity in the visited network to an address of an entity in the home network which address is obtained from another network entity in the visited network. The entity in the home network receiving the application level registration message uses the received identification of the subscriber and the level or type of access to fetch from a storage in the home network a subscriber profile which is to be used to provide connectivity to the user equipment in the visited network and any network in accordance with the specified level or type of access in the application level registration message. The identification of the level or type of access contained in the application level of registration message is a pointer to the subscriber profile specifying the level or type of access and, upon fetching from the storage, is caused to be stored in a network entity either in the home network or in the visited network. The accessed subscriber profile is stored in the home network and accessed through a proxy entity in the visited network or is transmitted from the home network to the entity in the visited network from which the application level registration message was transmitted. Such entity is without limitation, a proxy server, gateway or serving call state control function (s-CSCF). The entity storing the subscriber profile in either the home network or the visited network functions to control the communications in accordance with well-known procedures for the subscriber user equipment in the visited network and the home network. If the visited network is a public cellular visited network, the entity receiving the subscriber profile for storage therein may be a s-CSCF; and if the visited network is a wireline ISP or a wireless LAN, the entity in the visited network receiving the subscriber profile may be a proxy server utilizing the session initiation protocol (SIP) or a gatekeeper in accordance with the H.323 specification. The entity in the visited network which resolves the address in the home network to which the application level registration message is addressed may be a domain name server (DNS).

Different levels or types of access may be used to provide diverse types of connectivity. The access may be an application level access. For example, the diverse types of connectivity may provide a different degree of bandwidth in communications for each different access, a different degree of secured communications for each different access, or different supported supplemental services for each different access which supplemental services may be diverse in nature, such as diverse telephony services without limitation thereof.

The networks connected to the home network through a visiting network providing services to a subscriber may be access networks such as, without limitation, a GPRS, wireless local area network (WLAN) or a DSL network. The call control entity in the controlling network needs to know at the time of registration the type of access network at which subscriber registration occurs. An access type indicator provided to the call control entity provides the requisite identification of access network. The access type indicator may be provided to the home network directly or indirectly through a visited network from subscriber equipment, an interface between the subscriber equipment and the access network or by determination of a call control entity based upon characteristics of the access network such as, without limitation, packet characteristics.

The generation of the subscriber profile and the use thereof at the home network or at a control entity may be accomplished in many ways. Without limitation, the subscriber registration at an access network may be accomplished by transmitting an access type indicator directly to or through a visited network to the home network which identifies the type of access network at which registration has occurred. The source of the access type indicator may be explicitly provided by subscriber equipment or an interface between the subscriber equipment and the access network at which the subscriber is registered or implicitly from the control entity in a visited network analyzing the notice of the communications to form the access network to the control entity. Thereafter, the home network generates or accesses the subscriber profile which may have two parts which are a general service part and a part particular to the characteristics of the access type network to which the subscriber may roam.

A method of controlling access of a subscriber to a network in accordance with the invention includes sending an identification of the subscriber and an access to be provided to the subscriber from the visited network of a plurality of networks connected to the home network to the home network; in response to the identification of the subscriber and the access to be provided to the subscriber storing a subscriber profile of an authorized access to be provided to the subscriber; and controlling access of the subscriber to any network dependent upon a comparison of service to be provided to the subscriber and the stored subscriber profile. The access may be an application level of access. The storing of the subscriber profile may be in the home network or may be in the visited network. Each access may provide a different degree of bandwidth in communications; a different degree of security in communications for each different access; or a different supported supplementary services for each different access. The home network may be an internet protocol network and the visited network may be a wireless public cellular bearer network. The public cellular bearer network may be a general packet radio system network. The home network may be an internet protocol network and the visited network may be an internet service provider. The home network may be an internet protocol network and the visited network may be a wireless local area network. The authorized access may be chosen from a plurality of authorized accesses which may be granted to the subscriber between the plurality of connected networks and the home network. An application level registration message containing the identification of the subscriber and the access may be generated in response to a request from subscriber equipment to a visited network entity; in response to an entity in the visited network receiving the request, an address of an entity in the home network may be obtained from a routing analysis in the visited network; and the application level registration message may be transmitted to the address in the home network. An entity of the home network may obtain the subscriber profile in response to receipt of the application level registration message.

A system in accordance with the invention includes a home network which stores a plurality of subscriber profiles each defining an access to be provided to a subscriber to a network; a plurality of networks connected to the home network; subscriber equipment connected to a visited network of the plurality of networks through which the subscriber obtains an access to any network; and wherein in response to connection of the subscriber equipment to the visited network, an identification of the subscriber and an access to be provided to the subscriber is sent to the home network, and a subscriber profile of an access to be provided to the subscriber is stored in one of the networks and access of the subscriber to any network is controlled by one of the networks storing the subscriber network dependent upon a comparison of the service to be provided to the subscriber and the stored subscriber profile. A network entity within the home network or within the visited network may store the subscriber profile.

A method of controlling access of a subscriber to roam in networks in accordance with the invention includes providing an identification of the subscriber and an access of the subscriber at a home network, the access comprising an identification of access to one of the networks in which the subscriber is registered; in response to the providing of the identification of the subscriber and the access at the home network, storing a subscriber profile indicating an access to be provided to the subscriber to at least the networks; and using the stored subscriber profile in controlling service provided to the subscriber. The controlling of the service provided to the subscriber may occur while the subscriber is roaming in a visited network and the networks may be access networks from which the subscriber may obtain services while roaming in the visited network. The subscriber profile may be stored in the home network or in a visited network. The sending of the identification of the subscriber and an access may occur in response to the transmission of an access type indicator identifying a network in which the subscriber is registered through the visited network to the home network. The subscriber profile may comprise general service data used in providing service to the subscriber and data regarding permitted access of the subscriber to the networks. The access may originate from equipment of the subscriber registered in one of the networks. The access may originate from a network entity providing an interface between the visited network and one of the access networks to which the subscriber is registered. The access may be determined by a call control entity based upon information obtained by the control entity about the network to which the subscriber is registered. In response to at least one subsequent identification of the subscriber and the access being provided at the home network, the home network may send to the visited network an acknowledgment of a change in registration of the subscriber to another access network. The access may be used by the home network to control connectivity of communications to the subscriber through the home network.

A method of controlling access of a subscriber to register in networks in accordance with the invention includes providing an identification of the subscriber at a home network; in response to the providing of the identification of the subscriber, storing a subscriber profile of an access to be provided to the subscriber to at least the networks; and using the stored subscriber profile in controlling service provided to the subscriber. The controlling of the service provided to the subscriber may occur while the subscriber is registered in a visited network and the networks may be access networks from which the subscriber may obtain services while registered in the visited network. The storing of the subscriber profile may be in the home network or in the visited network. The providing of the identification of the subscriber may occur in response to transmission of an access type indicator to the home network identifying an access network in which the subscriber is registered. The access may originate from equipment of the subscriber registered to one of the networks. The access may originate from a network entity providing an interface between the visited network and one of the access networks to which the subscriber is registered. The access may be determined by a call control entity based upon information obtained by the control entity about the network to which the subscriber is registered.

A system in accordance with the invention includes a home network which stores a plurality of subscriber profiles each defining an application level of access to be provided to a subscriber while registered in networks; networks in which the subscriber may register; at least one subscriber equipment which is connected to the networks while the subscriber is registered therein; and wherein in response to connection of the subscriber equipment to one of the networks at least an identification of the subscriber is provided at the home network, a subscriber profile of an authorized access to be provided to the subscriber to at least the networks is stored, and the stored subscriber profile is used in controlling service provided to the subscriber. The controlling of the service provided to the subscriber may occur while the subscriber is registered in a visited network and the networks may be access networks from which the subscriber may obtain services while roaming in the visited network. A storage in a visited network may store the subscriber profile. An access comprising an identification of access to one of the networks in which the subscriber is registered may be transmitted from the visited network to the home network and the storing of the subscriber profile may be in response to the identification of access at the home network. The stored subscriber profile may be used by the visited network in controlling service provided to the subscriber.

### BRIEF DESCRIPTION OF DRAWINGS

Fig. 1 illustrates a first embodiment of a plurality of networks connected to a home network in accordance with the present invention.
Fig. 2 illustrates a first embodiment of connectivity of a subscriber through subscriber equipment from a public cellular visited network to a home network in accordance with Fig. 1 assuming call control is at the visited network.
Fig. 3 illustrates a second embodiment of connectivity of a subscriber through subscriber equipment from a public cellular visited network to a home network in accordance with Fig. 1 assuming call control is at the home network.
Fig. 4 illustrates connectivity of a subscriber through subscriber equipment through a wireline ISP to a home network in accordance with the present invention.
Fig. 5 illustrates connectivity of a subscriber through subscriber equipment through a wireless LAN to a home network in accordance with the present invention.
Fig. 6 illustrates a second embodiment of a plurality of networks connected to a home network through a visited network in accordance with the present invention.
Fig. 7 illustrates a first methodology of generation and transferring of subscriber profile information with the embodiment of Fig. 6.
Fig. 8 illustrates a second methodology of generation and transferring of subscriber profile information with the embodiment of Fig. 6.
Fig. 9 illustrates a third methodology of generation and transferring of subscriber profile information with the embodiment of Fig. 6.

Like parts are identically identified throughout the drawings.

### BEST MODE(S) FOR CARRYING OUT THE INVENTION

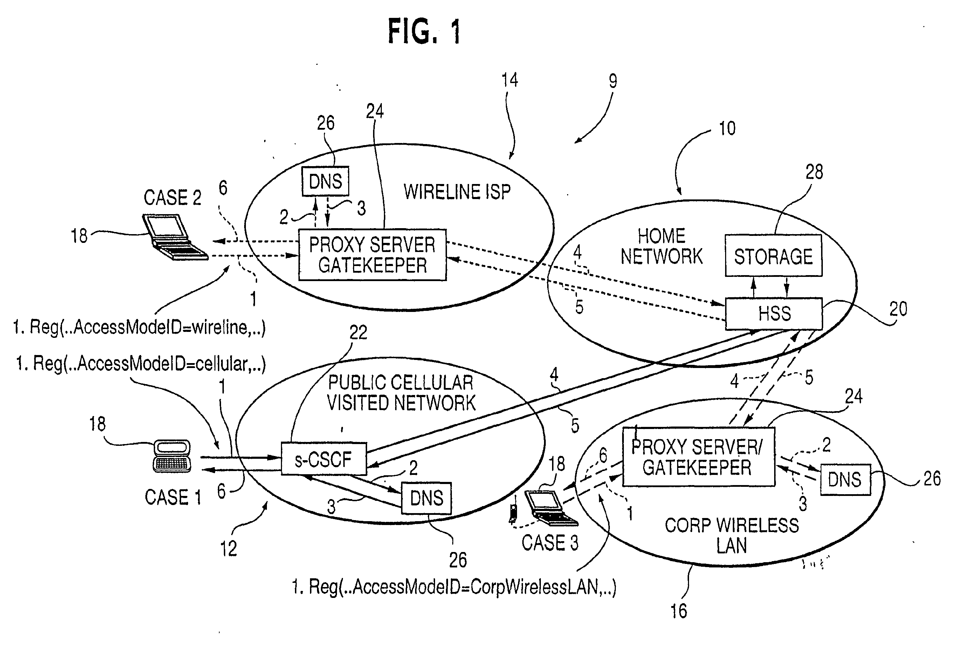

Fig. 1 illustrates a first embodiment 9 of a plurality of networks directly connected to a home network 10. The plurality of connected networks which, without limitation, may be as illustrated in Fig. 1 a public cellular visited network 12 such as GPRS, a wireline ISP 14 and a corporation wireless LAN 16. As illustrated, the connectivity of the particular subscriber equipment 18 is identified as "Case 1", "Case 2" and "Case 3" respectively between the public cellular visited network 12, wireline ISP 14 or corporation wireless LAN 16 and the home network 10. In each of the three cases, an application level registration message is sent from an entity, such as s-CSCF 22 or Proxy Server/Gatekeeper 24, in a visited one the plurality of networks 12, 14 and 16 connected to a home subscriber server (HSS) 20 or user mobility server (UMS) which contains the subscriber identification and the different profile for different access modes to be provided to the subscriber. The application level registration message contains an identification of the subscriber such as, but not limited to, the IMSI of the subscriber equipment 18 and the level or type of access which is encoded as a multiple bit access mode identification and is transmitted from the network entity 22 or 24 in the visited network to the HSS 20 in the home network 10. In the public cellular visited network 12, the entity transmitting the application level registration message is a s-CSCF 22 which is well known; in the wireline ISP the entity transmitting the application level registration message is a proxy server/gatekeeper 24 which are well known with the proxy server using the SIP protocol or the gatekeeper being in accordance with the H.323 specification; and in the corporate wireless LAN 16, the network entity is also a proxy server/gatekeeper 24.

Case 1 operation is explained from an overview standpoint as follows. The subscriber utilizes subscriber equipment 18 to transmit message "1" to the s-CSCF 22 to request an application level registration through the public cellular visited network 12 to the home network 10. The s-CSCF 22 transmits message "2" to a DNS 26 which resolves the address of the HSS 20 to which the application level registration message is to be sent from the s-CSCF 22. The address is returned from the DNS 26 to the s-CSCF 22 as message "3". Thereafter the s-CSCF 22 transmits message "4" to the HSS 20 which contains the subscriber identification and an identification of the application level of connectivity which is sought. The HSS 20 retrieves from a storage 28 a subscriber profile of an authorized type or level of access associated with the subscriber identified in the message received by the HSS 20. The storage 28 may be any home network entity and may be part of the HSS 20. The storage 28 stores for each of the connected networks 12, 14 and 16 or any other network, including networks other than the networks illustrated in Fig. 1 to which the subscriber may be connected to obtain telecommunications services, one of a plurality of selectable subscriber profiles defining the authorized level or type of access. Thereafter, when the home network decides that the call control will be located in the visited network in this embodiment, the network entity 20 transmits message "5" containing the subscriber profile containing the authorized level or type of access to the s-CSCF 22 for storage therein. The retrieved subscriber profile is compared by the s-CSCF with the level or type of service contained in a requested type of connection, which may be any type of telecommunications connection of the subscriber, through the visited network 12. The control of access of the subscriber in the visited network 12 is dependent upon a comparison of the level or type of service which is sought to be provided to the subscriber by an attempt to connect the subscriber through the visited network 12 and the stored subscriber profile of the authorized level or type of access.

Case 2 operates in a manner analogous to Case 1 with the communications "1"-"6" therein being of the same nature as described with respect to Case 1 with the exception that the visited network entity of the wireline ISP 14 is a proxy server/gatekeeper 24 instead of the s-CSCF 22 of the public cellular visited network 12.

Case 3 operates in a manner analogous to Case 1 with the communications "1 "-"6" being of the same nature as described with respect to Case 1 with the exception that the visited network entity of the wireless LAN 16 is a proxy server/gatekeeper 24 instead of the s-CSCF 22 of the public cellular visited network 12.

The subscriber profiles of levels or types of access which are available for communications between a subscriber through subscriber equipment 18 and any connected network are diverse in nature. For example, without limitation, the subscriber profiles may each identify a different level or type of access providing a different degree of bandwidth in communications for each different access; a different degree of security in communications for each different access mode or different connection of supplementary services for each different access. For example, the use of different bandwidths for connectivity between the subscriber equipment and the visited network or the home network may be dependent upon an authorized expense of communications available to the subscriber, the functionality of the subscriber equipment or network conditions. For example, the different degrees of access for security purposes may be dependent upon the subscriber, the network or the subscriber equipment. As a result of the diversity of the types or levels of access which may be requested by or allocated to the subscriber, it is possible to provide different types of connection services to the subscriber when connecting different types of subscriber equipment 18 through different networks 12, 14 and 16 or any other connected network including networks not illustrated in Fig. 1.

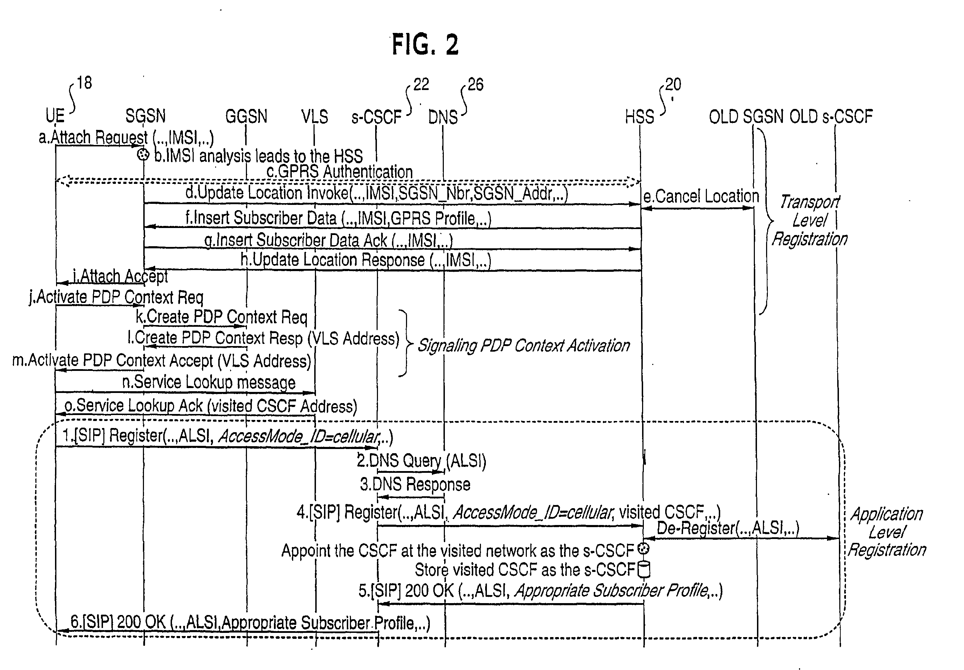

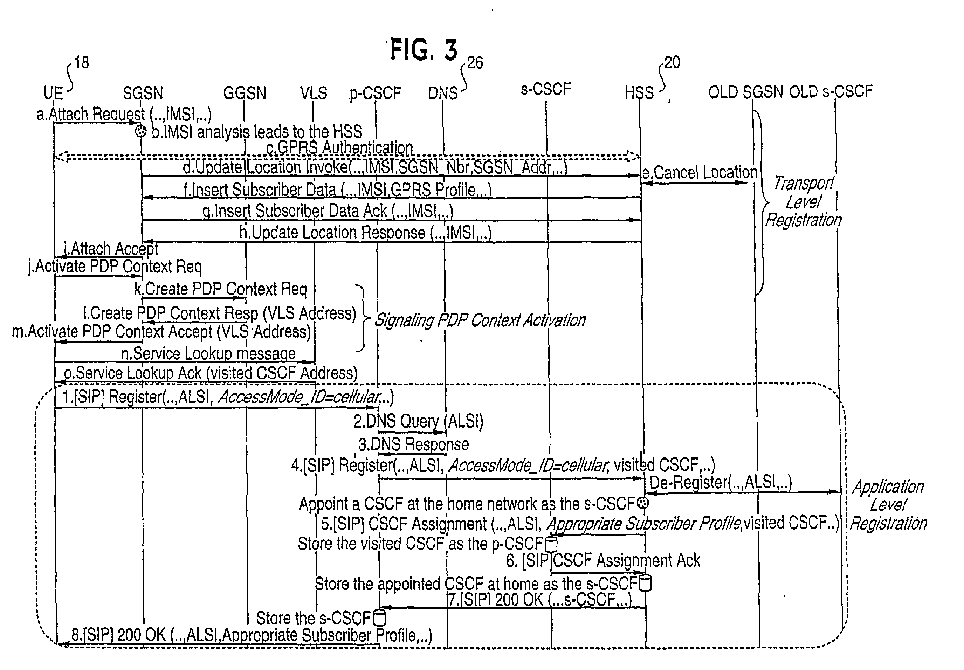

Figs. 2 and 3 illustrate detailed call flows for first and second embodiments of a public cellular visited network functioning as the visited network connected to the home network 10. The distinction between Figs. 2 and 3 is that in Fig. 3 the s-CSCF, which controls the communications, resides in the home network with a p (proxy) -CSCF residing in the visited network 12 which functions as an intermediate entity in the providing of connectivity for the communications between the storage of the subscriber profiles of the levels or types of access in the s-CSCF of the home network and the visited network. In essence the p-CSCF acts as a proxy call state control function in the visited network with the actual call state control function being exercised by the s-CSCF in the home network 10.

With reference to Fig. 2, the transport level registration procedure and the signalling packet data protocol (PDP) context establishment are generally in accordance with the prior art procedures for public cellular networks such as GPRS and therefore are only described briefly.

The conventional communications of Fig. 2 are described as follows: The communications begin with an attached request at "a" which contains the user equipment IMSI which is transmitted from the subscriber equipment to a serving GPRS support node. Thereafter, at "b" an IMSI analysis occurs in order to obtain the address of the HSS 20 in the home network 10. The next operation "c" is a GPRS authentication as illustrated by the bidirectional communications between the UE and the HSS 20. At "d" a communication is transmitted from the SGSN to the HSS 20. The HSS 20 replies back to the SGSN at "f" with an insert subscriber data message. The SGSN replies back to the HSS with an insert subscriber data acknowledgment at "g". The HSS 20 replies with an update location response at "h". The SGSN transmits an attachment acceptance at "i" to the UE. The UE transmits an activate PDP context request at "j" to the SGSN. The SGSN creates a PDP context request at "k" which is transmitted to a gateway GPRS support node. The SGSN transmits a create PDP context response at "1". The SGSN transmits an activate PDP context acceptance to the UE at "m". The UE transmits at "o" a service lookup message to a visited CSCF location server (VLS). This sequence contains the transport level registration and signalling PDP context activation.

The application level registration involving steps "1 "-"6" is in accordance with the steps 1-6 described above with reference to Fig. 1. For each new application level registration message, a s-CSCF is associated with the subscriber profile which has been fetched in response to the application level registration message. With each new application level registration message, the previous s-CSCF is deactivated. This is identified by "De-Register (.., ALSI, ..)" in Fig. 2. The transmission of the subscriber profile to the s-CSCF of the visited network for storage therein provides the s-CSCF with the subscriber profile which is used for a comparison of the level or type of service to be provided to the subscriber and the stored subscriber profile in order to control access of the subscriber to the network which may either be granted or denied depending upon whether the comparison yields that the level or type of access does not exceed the stored level or type of access contained in the subscriber profile. As illustrated, step "6" shows the authorization of the subscriber equipment in order to have connectivity which is identified in step 6 by "200 ok" which is a standard SIP designation for a granted authorization.

Fig. 3, as discussed above, is analogous to Fig. 2 except that the s-CSCF is resident in the home network 10 and a p-CSCF is resident in the visited network through which the communications involving the application level registration message are routed between the UE and the HSS 20 of the home network 10. As a result of the p-CSCF being resident in the visited network 12, additional messages "[SIP]CSCF assignment" identified as "5" and "[SIP]CSCF Assignment Ack" identified as "6" are required but otherwise the communications are identical to Fig. 2. Messages 5 and 6 are used by the HSS 20 to assign a s-CSCF in the home network and download the subscriber profile to the s-CSCF.

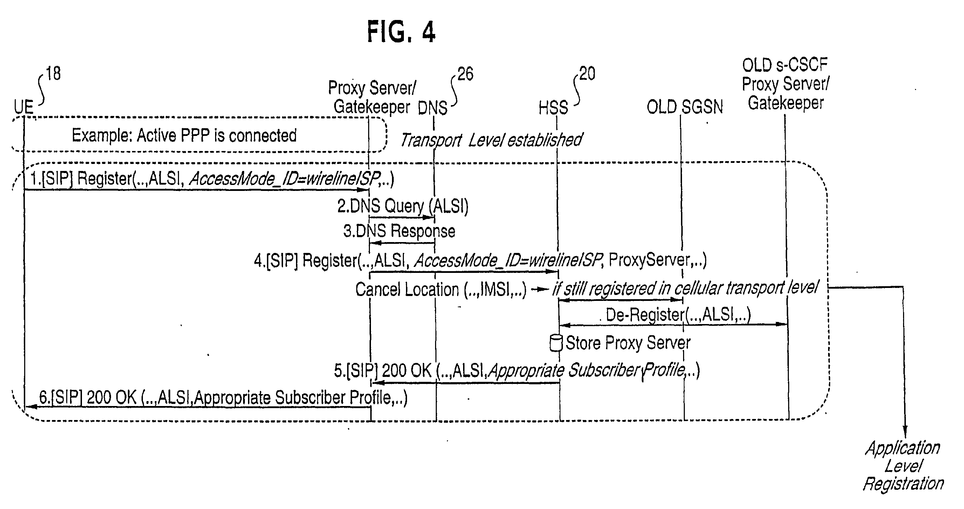

Fig. 4 illustrates the sequence of communications for the wireline ISP 14 with the transport level registration process, which is well known, having been established. The communications "1 "-"6" are in accordance with Fig. 1 except that the deregistration process between the HSS and an old SGSN and an old one of a s-CSCF/Proxy Server/Gatekeeper are illustrated involving previous application level registration messages. The communications "1"-"6" are analogous to the communications of Figs. 2 and 3 with the exception that the proxy server is the entity in the wireline ISP 14 through which the application level registration message communications are routed and further which stores the fetched subscriber profile.

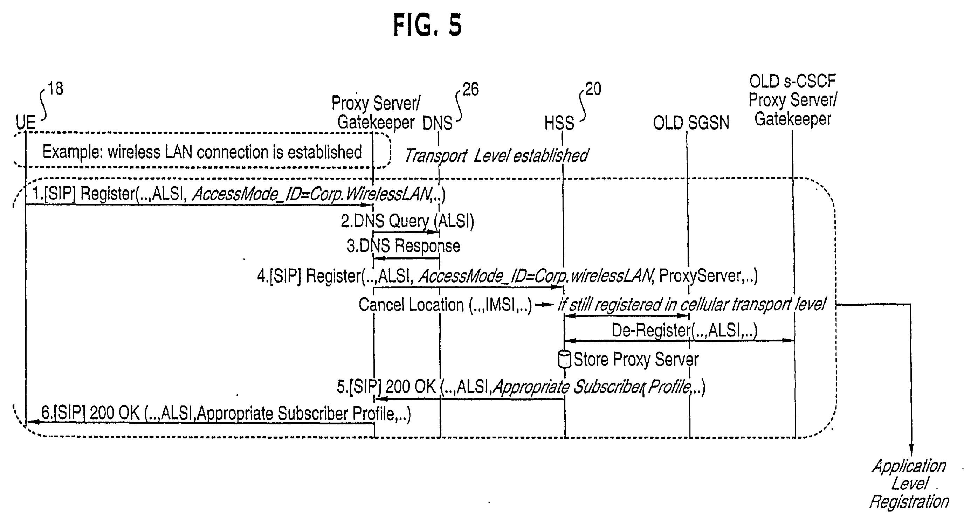

Fig. 5 illustrates the sequence of communications between the corporate wireless LAN 16 and the home network 10. The transport level registration process, which is well known, is established. The communications "1 "-"6" are in accordance with Fig. 1 except that the deregistration process between the HSS and an old SGSN and an old one of a s-CSCF/Proxy Server/Gatekeeper are illustrated involving previous application level registration messages.

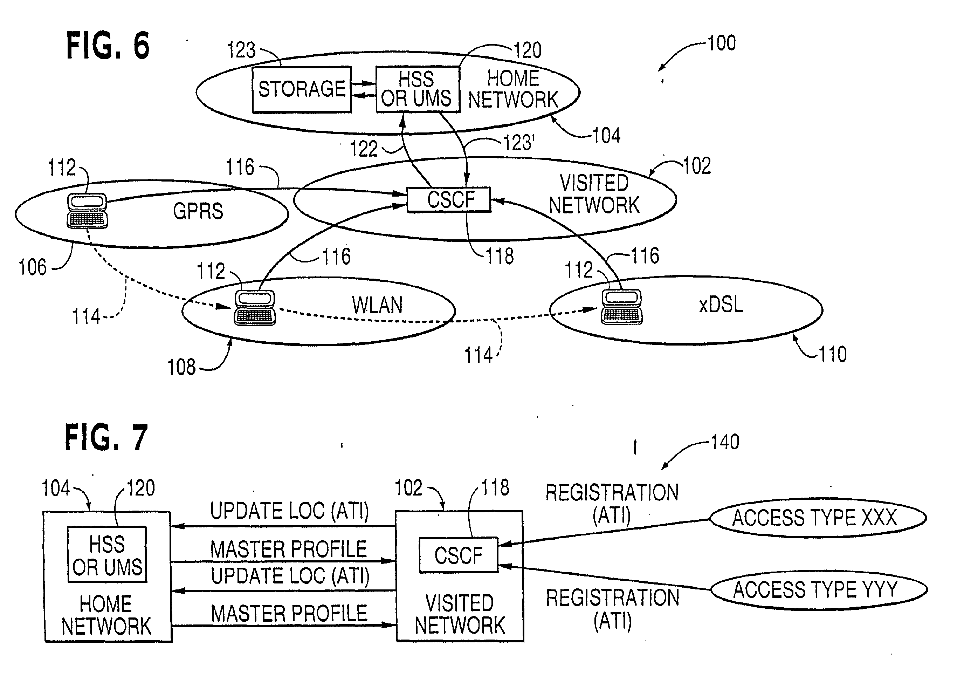

Fig. 6 illustrates a second embodiment 100 of a plurality of networks connected through a visited network 102 to a home network 104. The plurality of networks may be access type networks which, without limitation, may be as illustrated a GPRS network 106, a wireless local area network (WLAN) 108, or a DSL network 110. The embodiment 100 is different than the embodiment 9 of Fig. 1 in that subscriber equipment 112 is registered in the access networks 106, 108 and 110 by connection through the visited network 102 to the home
network 104 which performs the same functions generally as the home network 10 of Fig. 1. The subscriber's roaming between registration in the access networks 106, 108 and 110 is indicated by dotted line 114. In the embodiment 100, the subscriber equipment 112 generates a transport level registration message which is known and an application level registration message 116 which is communicated to the CSCF entity 118 of visited network 102. The application level registration message 116 provides at least an identification of the subscriber and in two embodiments as discussed below, a level or type of access which is transmitted to the CSCF entity 118 and then to an HSS or UMS entity 120 of home network 104. The CSCF 118 transmits a message, e.g. a SIP register message 122 to the HSS or UMS 120 of the home network 104. The update location message 122 informs the HSS or UMS 120 of the subscriber equipment identification and particular access network 106, 108 or 110 at which the subscriber equipment 112 is registered so as to permit the home network 104 to route communications through the visited network 102 to the particular access network 106, 108 or 110 in which the subscriber is registered. In addition to the updating of the location of the subscriber equipment 112 in two embodiments described below, an access type indicator (ATI) is transmitted from the CSCF entity 118 to the HSS or UMS 120 which identifies the type of access network at which the subscriber is registered. The content of the ATI permits the HSS or UMS to control connectivity through the visited network 102 for communications which are to terminate in one of the access networks 106, 108 and 110, such as, for example, based upon a subscriber profile stored in storage 123, which is analogous to the relationship between the HSS 20 and the storage 28 of the home network 10 of the embodiment 9 of Fig. 1. The HSS or UMS 120 transmits, at least in response to the first registration message from one of the access type networks 106, 108 and 110, a subscriber profile to be used by the CSCF entity 118 in controlling of connectivity communications to the subscriber equipment 112. The subscriber profile may be all subscriber data, which is not organized into any specific access network specific information, that is conveyed to the CSCF entity 118 or, alternatively, the subscriber profile may be general service data which pertains to aspects of the subscriber which are not particular to the access type networks 106, 108 and 110 and access specific information which pertains to service aspects of the subscriber which are particular to the access specific networks in which the subscriber equipment 112 roams. The general subscriber information and the access specific information are referred to as "a master profile" hereinbelow.

Upon registration of the subscriber with one of the access networks 106, 108 and 110, it is necessary to inform at least the CSCF entity 118 and in two embodiments discussed below the HSS or UMS 120 of the type of the access network in which the subscriber is registered.

The methodology of informing the CSCF entity 118 of the type of access type network 106, 108, 110 to which the subscriber is registered may be explicit or implicit. The first manner of generating an explicit ATI is where the terminal 112 provides the ATI to the CSCF entity 118. Another explicit manner of generating the ATI is from a network element providing an interface for the CSCF in that access network between the subscriber equipment 112 and the access type 106, 108 and 110 which transmits the ATI to the CSCF entity 118. Finally, the CSCF entity 118 may implicitly determine from the received communications, the type or identity of the ATI network, such as by the source address or route of the packets coming from the access network. Each time a terminal roams between one access type network to another access type network as indicated by arrow 114, it is necessary, as described above, for the CSCF entity 118 to determine the type of network in which the terminal 112 is currently registered.

Fig. 7 illustrates a first methodology 140 in which the ATI is generated by one of the access type networks which are denominated as "XXX" and "YYY". The ATI is communicated to the CSCF entity 118 which is transmitted along with the update location information to the HSS or UMS 120 which conveys the subscriber equipment identification. The ATI includes an identification of the type of network at which the subscriber equipment 112 is registered. While not illustrated in Fig. 7, storage 123 in the home network 104 is accessed to obtain the subscriber profile which is retrieved based upon the identification of the subscriber and the nature of the access type network to which the subscriber is registered. This information is transmitted as a master profile to the CSCF entity 118 which functions as the call controlling entity in a known manner to permit or deny termination of communications to the subscriber equipment 112 based upon the subscriber profile and the capability of the current access type network to provide the required type of connectivity.

For example, the subscriber profile may permit communications to be terminated to the subscriber equipment 112 at one of the access type networks but, at the time at which termination is desired, the operational characteristics of the access type network may require refusal, all of which is performed by the CSCF entity 118 based upon having the master profile in its possession. Each time the terminal 112 roams, as indicated by arrow 114, a new registration message 116 is generated which is transmitted from the access type network to the CSCF entity 118 which causes a new update location message including the ATI to be sent to the HSS or UMS 120 of the home network 104. Thereafter, the master profile is transmitted from the HSS or UMS 120 to the CSCF entity 118. This process will occur each time a new registration occurs produced by roaming between the access type networks 106, 108 and 110.

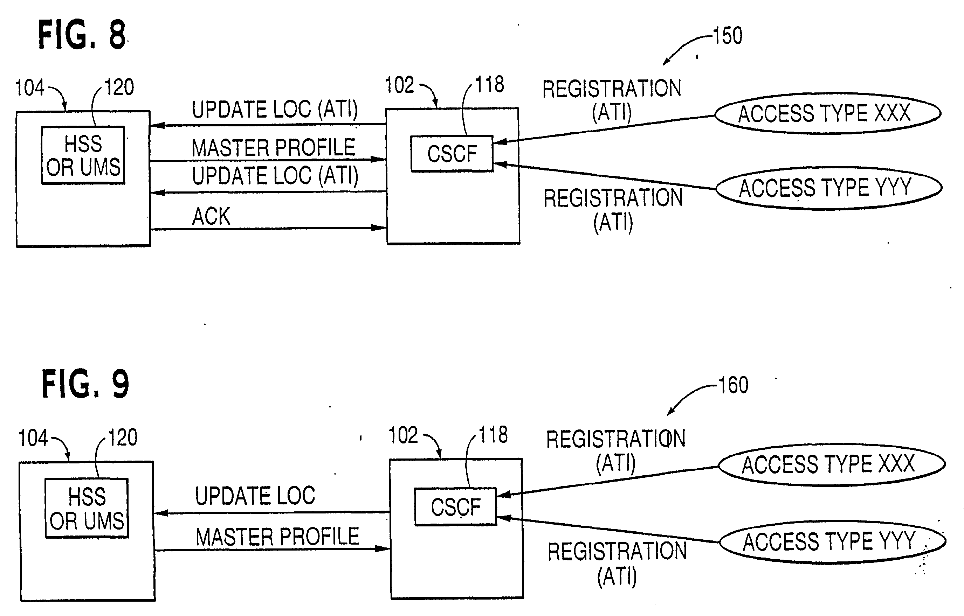

Fig. 8 illustrates a second methodology 150 by which the subscriber information is processed. The communications are identical to the methodology 140 of Fig. 7 except that, in this circumstance, an acknowledgment 123' is sent from the HSS or the UMS 120 to the CSCF 118 after the first registration has occurred as a consequence of the subscriber profile already being stored in the CSCF entity 118. This enhances network efficiency.

Fig. 9 illustrates a third methodology 160 by which the subscriber information is processed. The procedure 160 of Fig. 9 differs from the procedures 140 and 150 respectively of Figs. 7 and 8 in that the ATI is only transmitted to the CSCF entity 118. Only the update location information is transmitted from the CSCF entity 118 to the HSS or UMS 120 followed by the transmission of the master profile back to the CSCF as performed in the procedures 140 and 150. The difference is that, as a consequence of the HSS or UMS 120 not knowing the ATI, the home network 104 cannot perform any call termination functions which can result in the overall network being less efficient in that a communication which is not suited for termination at the subscriber device 112 in a particular access type network will be transmitted to the visited network 102 where the CSCF entity 118 performs the function of denying termination of the communication in the appropriate circumstance either because the subscriber's profile does not permit such a termination to occur or even if the subscriber profile does permit the termination to occur, the functionality of the access type network at the time that the communication is sought to be terminated does not permit the termination to occur. If the CSCF entity 118 determines the ATI implicitly instead of with an explicit message as described above in the procedures 140,150 and 160, the same processes are performed thereafter after the ATI indicating the type of access network at which the subscriber equipment 112 is registered is implicitly determined.

The embodiment of Figs. 6-9 permits adaption of the network which includes a home network 102 and a visited network 104 to provide an available set of services to access type networks 106-110 in which a subscriber is registered. This permits such functions as call screening at the access network at which the subscriber terminal 112 is registered to be performed to deny connection thereto based upon any number of factors which may include quality of service (QoS).

In addition to when access network changes occur, at which time the HSS sends the subscriber information to the CSCF, the subscriber information may be requested at other times from the HSS by the CSCF.

While the invention has been described in terms of its preferred embodiments, it should be understood that numerous modifications may be made thereto without departing from the scope of the appended claims. It is intended that all such modifications fall within the scope of the appended claims.

## Claims

1. A method comprising:
sending an identification of the subscriber and an identification of a type or level of access which is requested by the subscriber from a visited network of a plurality of networks (12, 14, 16) connected to a home network (10);
in response to the identification of the subscriber and the identification of the type or level of access which is requested by the subscriber, storing a subscriber profile containing an authorized type or level of access associated with the subscriber; and
controlling access of the subscriber to any network dependent upon a comparison of the type or level of access requested by the subscriber and the authorized type or level of access contained in the stored subscriber profile.

2. A method in accordance with claim 1 wherein:
the storing of the subscriber profile is in one of the home network or the visited network.

3. A method in accordance with claim 1 wherein:
each level of access provides a different degree of bandwidth or security in communications or different supplementary services.

4. A method in accordance with claim 1 wherein:
the home network is an internet protocol network and the visited network is one of a wireless public cellular bearer network, a wireless local area network or an internet service provider.

5. A method in accordance with claim 4 wherein:
the public cellular bearer network is a general packet radio system network.

6. A method in accordance with any of claims 1 to 5 wherein:
the level of access is chosen from a plurality of authorized levels of accesses which may be granted to the subscriber.

7. A method in accordance with claim 1 wherein:
an application level registration message (116) containing the identification of the subscriber and the level of access is generated in response to a request from subscriber equipment to a visited network entity;
in response to an entity in the visited network receiving the request, an address of an entity in the home network is obtained from a routing analysis in the visited network; and
the application level registration message is transmitted to the address in the home network.

8. A method in accordance with claim 7 wherein:
an entity of the home network obtains the subscriber profile in response to receipt of the application level registration message.

9. A method in accordance with claim 1 wherein:
the identification of the subscriber and the type or level of access is provided at a home network of the subscriber during or after the subscriber registers in a network, the level of access comprising an identification of access to one of the networks in which the subscriber is registered.

10. A method in accordance with claim 9 wherein the subscriber profile indicates an access associated with the subscriber to at least the plurality of networks.

11. A method in accordance with claim 10 wherein:
the controlling of the access provided to the subscriber occurs while the subscriber is registered in a visited network and the plurality of networks are access networks from which the subscriber may obtain services while roaming in the visited network.

12. A method in accordance with claim 11 wherein:
the controlling of the access provided to the subscriber occurs from a request of a call controlling entity.

13. A method in accordance with claims 9 or 11 wherein:
the sending of the identification of the subscriber and the identification of the type or level of access occurs in response to the transmission of an access type indicator identifying a network in which the subscriber is registered through the visited network to the home network or in response to a request from a call serving entity.

14. A method in accordance with claims 11 or 13 wherein:
the subscriber profile comprises general service data used in providing service to the subscriber and data regarding permitted access of the subscriber to the networks.

15. A method in accordance with claims 9 or 11 wherein:
the application level of access originates from equipment of the subscriber registered to one of the networks.

16. A method in accordance with claim 11 wherein:
in response to at least one subsequent identification of the subscriber and the level of access being provided at the home network, the home network sends to the visited network an acknowledgment of a change in registration of the subscriber to another access network.

17. A method in accordance with any of claims 9, 11, 13 to 16 wherein:
the level of access is used by the home network to control connectivity of communications to the subscriber through a home network.

18. A method in accordance with claim 1, further comprising a step of providing an identification of the subscriber at a home network;

19. A method in accordance with claim 18 wherein:
the providing of the identification of the subscriber occurs in response to transmission of an access type indicator to the home network identifying an access network.

20. A method in accordance with claim 18 wherein:
the level of access originates from an interface between the visited network and one of the access networks.

21. A method in accordance with claim 18 wherein:
the level of access is determined by a call control entity based upon information obtained by the control entity about the network.

22. A method in accordance with claim 1 wherein:
the level of access is an application level access.

23. A system comprising:
a home network which stores a plurality of subscriber profiles each defining levels of access associated with a subscriber to a network;
a plurality of networks connected to the home network;
subscriber equipment (18) connected to a visited one of the plurality of networks through which the subscriber obtains an access to any network; and wherein the system is configured:
in response to connection of the subscriber equipment to the visited network, to send from the visited network an identification of the subscriber and an identification of a type or level of access which is requested by the subscriber;
in response to the identification of the subscriber and the identification of the type or level of access which is requested by the subscriber, to store a subscriber profile including an type or authorized level
of access associated with the subscriber; and
to control access of the subscriber to any network dependent upon a comparison of the type or level of access requested by the subscriber and the authorized type or level of access contained in the stored subscriber profile.

24. A system in accordance with claim 23 comprising:
a network entity within the home network or the visited network which is configured to store the subscriber profile.

25. A system in accordance with claim 23 wherein:
the system is configured to control of the access of the subscriber while the subscriber is registered in a visited network and wherein the networks are access networks (106, 108, 110) from which the subscriber may obtain services while registered in the visited network.

26. A system in accordance with claim 23 or claim 25 comprising:
a storage in a visited network, the storage being configured to store the subscriber profile.

27. A system in accordance with claim 25 wherein:
the system is configured to transmit from the visited network to the home network the identification of the type or level of access to one of the networks in which the subscriber is registered.

28. A system in accordance with claim 25 wherein:
the visited network is configured to use the stored subscriber profile in controlling the access of the subscriber.

## Patentansprüche

1. Ein Verfahren umfassend:
Senden einer Teilnehmeridentifikation und einer Identifikation einer Zugriffsart oder -ebene, die von dem Teilnehmer angefordert wird, von einem besuchten Netzwerk, welches eines von mehreren Netzwerken (12, 14, 16) ist, die mit einem Heimnetzwerk (10) verbunden sind;
auf die Teilnehmeridentifikation und die Identifikation der Zugriffsart oder -ebene hin, die von dem Teilnehmer angefordert wird, Speichern eines Teilnehmerprofils, das eine dem Teilnehmer zugehörige autorisierte Zugriffsart oder -ebene enthält; und
Steuern des Zugriffs des Teilnehmers zu einem beliebigen Netzwerk abhängig von einem Vergleich der von dem Teilnehmer angeforderten Zugriffsart oder -ebene mit der autorisierten Zugriffsart oder -ebene, die in dem gespeicherten Teilnehmerprofil enthalten ist.

2. Ein Verfahren gemäß Anspruch 1, wobei:
das Speichern des Teilnehmerprofils in dem Heimnetzwerk oder dem besuchten Netzwerk geschieht.

3. Ein Verfahren gemäß Anspruch 1, wobei:
jede Zugriffsebene einen unterschiedlichen Grad an Kommunikationsbandbreite oder - sicherheit oder verschiedene Zusatzdienste bereitstellt.

4. Ein Verfahren gemäß Anspruch 1, wobei:
das Heimnetzwerk ein Internet-Protokoll-Netzwerk und das besuchte Netzwerk ein drahtloses öffentliches zelluläres Trägernetzwerk, ein drahtloses Local Area Network oder ein Internet Service Provider ist.

5. Ein Verfahren gemäß Anspruch 4, wobei:
das drahtlose öffentliche zelluläre Trägernetzwerk ein General-Packet-Radio-System-Netzwerk ist.

6. Ein Verfahren gemäß jedem der Ansprüche 1 bis 5, wobei:
die Zugriffsebene aus mehreren autorisierten Zugriffsebenen ausgewählt wird, welche dem Teilnehmer eingeräumt werden können.

7. Ein Verfahren gemäß Anspruch 1, wobei:
auf eine Anfrage von Teilnehmerausrüstung an eine Entität des besuchten Netzwerks hin eine Anwendungsebene-Registrierungsnachricht (116) erzeugt wird, welche die Teilnehmeridentifikation und die Zugriffsebene enthält;
auf Empfangen der Anfrage durch eine Entität des besuchten Netzwerks hin eine Adresse einer Entität des Heimnetzwerks durch eine Routing-Analyse in dem besuchten Netzwerk erhalten wird; und
die Anwendungsebene-Registrierungsnachricht an die Adresse in dem Heimnetzwerk übertragen wird.

8. Ein Verfahren gemäß Anspruch 7, wobei:
eine Entität des Heimnetzwerks das Teilnehmerprofil auf Empfang der Anwendungsebene-Registrierungsnachricht hin erhält.

9. Ein Verfahren gemäß Anspruch 1, wobei:
die Teilnehmeridentifikation und die Zugriffsart oder -ebene im Heimnetzwerk des Teilnehmers bereitgestellt wird, während oder nachdem sich der Teilnehmer im Netzwerk registriert, wobei die Zugriffsebene eine Identifikation des Zugriffs zu einem der Netzwerke umfasst, in welchen der Teilnehmer registriert ist.

10. Ein Verfahren gemäß Anspruch 9, wobei das Teilnehmerprofil einen dem Teilnehmer zugehörigen Zugriff zu wenigstens den mehreren Netzwerken angibt.

11. Ein Verfahren gemäß Anspruch 10, wobei:
das dem Teilnehmer bereitgestellte Steuern des Zugriffs erfolgt, während der Teilnehmer in einem besuchten Netzwerk registriert ist und die mehreren Netzwerke Zugriffsnetzwerke sind, von denen der Teilnehmer bei Roaming in dem besuchten Netzwerk Dienste erhalten kann.

12. Ein Verfahren gemäß Anspruch 11, wobei:
das dem Teilnehmer bereitgestellte Steuern des Zugriffs durch eine Anfrage einer Rufsteuerungsentität erfolgt.

13. Ein Verfahren gemäß den Ansprüchen 9 oder 11, wobei:
das Senden der Teilnehmeridentifikation und der Identifikation der Zugriffsart oder -ebene auf die Übertragung eines Zugriffsartidentifikators, der ein Netzwerk identifiziert, in welchem der Teilnehmer über das besuchte Netzwerk in dem Heimnetzwerk registriert ist, oder auf eine Anfrage von einer Rufsteuerungsentität hin erfolgt.

14. Ein Verfahren gemäß den Ansprüchen 11 oder 13, wobei:
das Teilnehmerprofil allgemeine Dienstdaten, die beim Dienst-Bereitstellen an den Teilnehmer verwendet werden, und Daten über dem Teilnehmer gestatteten Zugriff zu den Netzwerken umfasst.

15. Ein Verfahren gemäß den Ansprüchen 9 oder 11, wobei:
die Anwendungszugriffsebene von Teilnehmerausrüstung stammt, die in einem der Netzwerke registriert ist.

16. Ein Verfahren gemäß Anspruch 11, wobei:
das Heimnetzwerk auf wenigstens eine nachfolgende Teilnehmeridentifikation und die am Heimnetzwerk bereitgestellte Zugriffsebene hin eine Bestätigung einer Änderung der Registrierung des Teilnehmers in einem anderen Zugriffsnetzwerk an das besuchte Netzwerk sendet.

17. Ein Verfahren gemäß den Ansprüchen 9, 11, 13 oder 16, wobei:
die Zugriffsebene von dem Heimnetzwerk verwendet wird, um Kommunikationskonnektivität für den Teilnehmer durch ein Heimnetzwerk zu steuern.

18. Ein Verfahren gemäß Anspruch 1, weiterhin umfassend einen Schritt des Bereitstellens einer Teilnehmeridentifikation bei einem Heimnetzwerk.

19. Ein Verfahren gemäß Anspruch 18, wobei:
das Bereitstellen der Teilnehmeridentifikation auf Übertragung eines Zugriffsartidentifikators an das Heimnetzwerk hin erfolgt, der ein Zugriffsnetzwerk identifiziert.

20. Ein Verfahren gemäß Anspruch 18, wobei:
die Zugriffsebene von einer Schnittstelle zwischen dem besuchten Netzwerk und einem der Zugriffsnetzwerke stammt.

21. Ein Verfahren gemäß Anspruch 18, wobei:
die Zugriffsebene durch eine Rufsteuerungsentität auf der Basis von Information über das Netzwerk bestimmt wird, die von der Steuerungsentität erhalten wurden.

22. Ein Verfahren gemäß Anspruch 1, wobei:
die Zugriffsebene ein Anwendungsebenenzugriff ist.

23. Ein System, umfassend:
ein Heimnetzwerk, welches mehrere Teilnehmerprofile speichert, die jeweils einem Teilnehmer zugehörige Zugriffsebenen zu einem Netzwerk definieren;
mehrere mit dem Heimnetzwerk verbundene Netzwerke;
Teilnehmerausrüstung (18), die mit einem besuchten Netzwerk der mehreren Netzwerke verbunden ist, über die der Teilnehmer einen Zugriff zu einem beliebigen Netzwerk erhält; und wobei das System konfiguriert ist:
auf Verbindung der Teilnehmerausrüstung zu dem besuchten Netzwerk hin von dem besuchten Netzwerk eine Teilnehmeridentifikation und eine Identifikation einer Zugriffsart oder -ebene, die von dem Teilnehmer angefordert wird, zu senden;
auf die Teilnehmeridentifikation und die Identifikation der Zugriffsart oder -ebene hin, die von dem Teilnehmer angefordert wird, ein Teilnehmerprofil zu speichern, das eine dem Teilnehmer zugehörige Zugriffsart oder autorisierte -ebene enthält; und
Zugriff des Teilnehmers zu einem beliebigen Netzwerk abhängig von einem Vergleich der von dem Teilnehmer angeforderten Zugriffsart oder -ebene mit der autorisierten Zugriffsart oder -ebene, die in dem gespeicherten Teilnehmerprofil enthalten ist, zu steuern.

24. Ein System gemäß Anspruch 23, umfassend:
eine Netzwerkentität in dem Heimnetzwerk oder dem besuchten Netzwerk, die konfiguriert ist, das Teilnehmerprofil zu speichern.

25. Ein System gemäß Anspruch 23, wobei:
das System konfiguriert ist, den Zugriff des Teilnehmers zu steuern, während der Teilnehmer in einem besuchten Netzwerk registriert ist und wobei die Netzwerke Zugriffsnetzwerke (106, 108, 110) sind, von denen der Teilnehmer Dienste erhalten kann, während er in dem besuchten Netzwerk registriert ist.

26. Ein System gemäß Anspruch 23 oder Anspruch 25, umfassend:
einen Speicher in einem besuchten Netzwerk, der konfiguriert ist, das Teilnehmerprofil zu speichern.

27. Ein System gemäß Anspruch 25, wobei:
das System konfiguriert ist, die Identifikation der Zugriffsart oder -ebene zu einem der Netzwerke, in welchem der Teilnehmer registriert ist, von dem besuchten Netzwerk an das Heimnetzwerk zu übertragen.

28. Ein System gemäß Anspruch 25, wobei:
das besuchte Netzwerk konfiguriert ist, das gespeicherte Teilnehmerprofil zum Steuern des Zugriffs des Teilnehmers zu verwenden.

## Revendications

1. Procédé comprenant les étapes ci-dessous consistant à :
envoyer une identification de l'abonné et une identification d'un type ou d'un niveau d'accès qui est demandé par l'abonné à partir d'un réseau visité parmi une pluralité de réseaux (12, 14, 16) connectés à un réseau domestique (10) ;
en réponse à l'identification de l'abonné et à l'identification du type ou du niveau d'accès qui est demandé par l'abonné, stocker un profil d'abonné contenant un type ou un niveau d'accès autorisé associé à l'abonné ; et
commander l'accès de l'abonné à un quelconque réseau en fonction d'une comparaison entre le type ou le niveau d'accès demandé par l'abonné et le type ou le niveau d'accès autorisé contenu dans le profil d'abonné stocké.

2. Procédé selon la revendication 1, dans lequel :
le stockage du profil d'abonné est mis en oeuvre dans le réseau domestique et / ou le réseau visité.

3. Procédé selon la revendication 1, dans lequel :
chaque niveau d'accès fournit un degré différent de bande passante ou de sécurité dans les communications, ou des services supplémentaires distincts.

4. Procédé selon la revendication 1, dans lequel :
le réseau domestique est un réseau de protocole Internet et le réseau visité est l'un des réseaux suivants : un réseau de porteuse cellulaire public sans fil, un réseau local sans fil ou un réseau de fournisseur de services Internet.

5. Procédé selon la revendication 4, dans lequel :
le réseau de porteuse cellulaire public est un réseau de service général de radiocommunication par paquets.

6. Procédé selon l'une quelconque des revendications 1 à 5, dans lequel :
le niveau d'accès est choisi parmi une pluralité de niveaux d'accès autorisés qui peuvent être accordés à l'abonné.

7. Procédé selon la revendication 1, dans lequel :
un message d'enregistrement de niveau d'application (116) contenant l'identification de l'abonné et le niveau d'accès est généré en réponse à une demande d'un équipement d'abonné à une entité de réseau visité ;
en réponse à la réception de la demande par une entité dans le réseau visité, une adresse d'une entité dans le réseau domestique est obtenue à partir d'une analyse de routage dans le réseau visité ; et
le message d'enregistrement de niveau d'application est transmis à l'adresse dans le réseau domestique.

8. Procédé selon la revendication 7, dans lequel :
une entité du réseau domestique obtient le profil d'abonné en réponse à la réception du message d'enregistrement de niveau d'application.

9. Procédé selon la revendication 1, dans lequel :
l'identification de l'abonné et le type ou le niveau d'accès sont délivrés au niveau d'un réseau domestique de l'abonné au cours ou après l'enregistrement de l'abonné dans un réseau, le niveau d'accès comprenant une identification d'accès à l'un des réseaux dans lequel l'abonné est enregistré.

10. Procédé selon la revendication 9, dans lequel le profil d'abonné indique un accès, associé à l'abonné, à au moins la pluralité de réseaux.

11. Procédé selon la revendication 10, dans lequel :
l'étape de commande de l'accès délivré à l'abonné est mise en oeuvre alors que l'abonné est enregistré dans un réseau visité, et la pluralité de réseaux sont des réseaux d'accès à partir desquels l'abonné peut obtenir des services lorsqu'il est en itinérance dans le réseau visité.

12. Procédé selon la revendication 11, dans lequel :
l'étape de commande de l'accès délivré à l'abonné est mise en oeuvre à partir d'une demande d'une entité de commande d'appel.

13. Procédé selon la revendication 9 ou 11, dans lequel :
l'envoi de l'identification de l'abonné et de l'identification du type ou du niveau d'accès est mis en oeuvre en réponse à la transmission d'un indicateur de type d'accès identifiant un réseau dans lequel l'abonné est enregistré, par l'intermédiaire du réseau visité, au réseau domestique ou en réponse à une demande en provenance d'une entité de desserte d'appels.

14. Procédé selon la revendication 11 ou 13, dans lequel :
le profil d'abonné comprend des données de services généraux utilisées dans la fourniture de service à l'abonné et des données concernant un accès autorisé de l'abonné aux réseaux.

15. Procédé selon la revendication 9 ou 11, dans lequel :
le niveau d'accès d'application provient d'un équipement de l'abonné enregistré dans l'un des réseaux.

16. Procédé selon la revendication 11, dans lequel :
en réponse à au moins une identification subséquente de l'abonné et du niveau d'accès fourni au niveau du réseau domestique, le réseau domestique envoie au réseau visité un accusé de réception d'une modification dans l'enregistrement de l'abonné auprès d'un autre réseau d'accès.

17. Procédé selon l'une quelconque des revendications 9, 11, 13 à 16, dans lequel :
le niveau d'accès est utilisé par le réseau domestique pour commander une connectivité des communications vers l'abonné au travers d'un réseau domestique.

18. Procédé selon la revendication 1, comprenant en outre une étape consistant à fournir une identification de l'abonné au niveau d'un réseau domestique.

19. Procédé selon la revendication 18, dans lequel :
l'étape de fourniture de l'identification de l'abonné est mise en oeuvre en réponse à la transmission d'un indicateur de type d'accès, au réseau domestique, identifiant un réseau d'accès.

20. Procédé selon la revendication 18, dans lequel :
le niveau d'accès provient d'une interface entre le réseau visité et l'un des réseaux d'accès.

21. Procédé selon la revendication 18, dans lequel :
le niveau d'accès est déterminé par une entité de commande d'appels sur la base d'informations obtenues par l'entité de commande en ce qui concerne le réseau.

22. Procédé selon la revendication 1, dans lequel :
le niveau d'accès est un niveau d'accès d'application.

23. Système comprenant :
un réseau domestique qui stocke une pluralité de profils d'abonnés définissant chacun des niveaux d'accès associés à un abonné auprès d'un réseau ;
une pluralité de réseaux connectés au réseau domestique ;
un équipement d'abonné (18) connecté à un réseau visité parmi la pluralité de réseaux au travers desquels l'abonné obtient un accès à un quelconque réseau, et dans lequel le système est configuré :
en réponse à la connexion de l'équipement d'abonné au réseau visité, de manière à envoyer, à partir du réseau visité, une identification de l'abonné et une identification d'un type ou d'un niveau d'accès qui est demandé par l'abonné ;
en réponse à l'identification de l'abonné et à l'identification du type ou du niveau d'accès qui est demandé par l'abonné, de manière à stocker un profil d'abonné comprenant un type ou un niveau d'accès autorisé associé à l'abonné ; et
de manière à commander l'accès de l'abonné à un quelconque réseau, en fonction d'une comparaison entre le type ou le niveau d'accès demandé par l'abonné et le type ou le niveau d'accès autorisé contenu dans le profil d'abonné stocké.

24. Système selon la revendication 23, comprenant :
une entité de réseau dans le réseau domestique ou le réseau visité, laquelle est configurée de manière à stocker le profil d'abonné.

25. Système selon la revendication 23, dans lequel :
le système est configuré de manière à commander l'accès de l'abonné alors que l'abonné est enregistré auprès d'un réseau visité, et dans lequel les réseaux sont des réseaux d'accès (106, 108, 110) à partir desquels l'abonné peut obtenir des services alors qu'il est enregistré auprès du réseau visité.

26. Système selon la revendication 23 ou 25, comprenant :
un élément de stockage dans un réseau visité, l'élément de stockage étant configuré de manière à stocker le profil d'abonné.

27. Système selon la revendication 25, dans lequel :
le système est configuré de manière à transmettre, depuis le réseau visité au réseau domestique, l'identification du type ou du niveau d'accès à l'un des réseaux dans lequel l'abonné est enregistré.

28. Système selon la revendication 25, dans lequel :
le réseau visité est configuré de manière à utiliser le profil d'abonné stocké en vue de commander l'accès de l'abonné.
